# FASCICULE DE BREVET EUROPEEN

(11) **EP 1 292 921 B1**
(45) Date de publication et mention de la délivrance du brevet: **16.11.2005**
(21) Numéro de dépôt: 01956590.2
(22) Date de dépôt: 21.06.2001
(51) Int. Cl.: G06T 17/20

(54) **RAFFINEMENT D'UN MAILLAGE TRIANGULAIRE EN TROIS DIMENSIONS**
VERFEINERUNG VON DREIDIMENSIONALEN POLYGONALEN GITTERDATEN
REFINEMENT OF A THREE-DIMENSIONAL TRIANGULAR MESH

(30) Priorité: 23.06.2000 FR 0008107
(43) Date de publication de la demande: 19.03.2003
(73) Titulaire: FRANCE TELECOM, 75015 Paris (FR)
(72) Inventeur: ALLIEZ, Pierre, F-06560 Valbonne (FR); LAURENT-CHATENET, Nathalie, F-35630 Vignoc (FR)
(74) Mandataire: Vidon, Patrice
(86) Numéro de dépôt international: PCT/FR2001/001964
(87) Numéro de publication internationale: WO 2001/099052

(56) Documents cités:
- WO-A-99/18517
- WO-A-99/34336
- US-A- 5 453 934
- US-A- 5 602 979
- US-A- 6 046 744
- YIN WU ET AL: "Simulation of static and dynamic wrinkles of skin" PROCEEDINGS. COMPUTER ANIMATION '96, PROCEEDINGS COMPUTER ANIMATION '96, GENEVA, SWITZERLAND, 3-4 JUNE 1996, pages 90-97, XP002164489 1996, Los Alamitos, CA, USA, IEEE Comput. Soc. Press, USA ISBN: 0-8186-7588-8
- COHEN I ET AL: "Optical flow and phase portrait methods for environmental satellite image sequences" COMPUTER VISION - ECCV 96. 4TH EURPEAN CONFERENCE ON COMPUTER PROCEEDINGS, PROCEEDINGS OF FOURTH EUROPEAN CONFERENCE ON COMPUTER VISION. ECCV 96, CAMBRIDGE, UK, 14-18 APRIL 1996, pages 141-150 vol.2, XP002164490 1996, Berlin, Germany, Springer-Verlag, Germany ISBN: 3-540-61123-1
- LECHAT P ET AL: "SCALABLE IMAGE CODING WITH FINE GRANULARITY BASED ON HIERARCHICAL MESH" PROCEEDINGS OF THE SPIE, janvier 1999 (1999-01), XP000862993
- DREGER A ET AL: "Construction of multiresolution triangular B-spline surfaces using hexagonal filters" PROCEEDINGS COMPUTER GRAPHICS INTERNATIONAL, HANNOVER, GERMANY, 22-26 JUNE 1998, vol. 16, no. 6, pages 339-356, XP000997610 Visual Computer, 2000, Springer-Verlag, Germany ISSN: 0178-2789

## Description

Le domaine de l'invention est celui du traitement des images. Plus précisément, l'invention concerne le traitement des images produites à partir de maillages polygonaux, et notamment de maillages triangulaires. Plus précisément encore, l'invention concerne le raffinement de maillages triangulaires ou triangularisés représentatifs d'objets en trois dimensions.

L'invention permet le développement de services à forte valeur ajoutée et d'interfaces homme machine évoluées. Elle trouve notamment des applications dans le domaine de la transmission de contenus interactifs, du télécommerce, des applications culturelles, du jeu et/ou du travail collaboratif.

Les maillages constituent de plus en plus fréquemment le support de représentation des objets, notamment dans une scène de réalité virtuelle. Ils représentent ainsi la majeure partie de la quantité d'informations décrivant une telle scène. Classiquement, un maillage est défini par un ensemble de sommets et de faces (ou un ensemble de sommets, d'arêtes et d'orientations) définissant une topologie.

De très nombreuses techniques de compression d'images sont connues, pour réduire la quantité de données nécessaires pour représenter une image ou une séquence d'images animées. On cherche ainsi, notamment, à réduire les débits des signaux numériques, en vue de leur transmission et/ou de leur stockage sur un support de données.

Conjointement, l'image ou la séquence d'images visualisée(s) sur un terminal de destination doit être de la meilleure qualité possible, ou à tout le moins, d'un niveau de qualité prédéterminé.

Il est donc particulièrement important d'améliorer la qualité perceptuelle des images produites à partir de maillages, tout en minimisant la quantité d'informations produites.

L'invention s'applique notamment, mais non exclusivement, à la visualisation d'images sur un terminal, ou à la visualisation d'objets composant une scène tridimensionnelle en cours de transmission progressive.

L'invention s'applique également à tout type de maillage polygonal relié à des données de type image ou vidéo, pouvant faire l'objet d'une triangulation.

Les surfaces de subdivision sont de plus en plus largement utilisées dans le domaine de l'informatique graphique, en raison de leur grande efficacité pour l'amélioration du rendu des surfaces courbes, le codage, la transmission, et la modélisation des images.

Les techniques de subdivision de surfaces définies par des maillages triangulaires sont notamment décrites dans le document SIGGRAPH 99 ("Subdivision for Modeling and Animation" ("Subdivision pour la modélisation et l'animation") par Denis Zorin). Les maillages triangulaires peuvent ensuite être raffinés par interpolation, qui conserve les sommets du maillage original tout en générant une surface possédant une C¹-différentiabilité (Dyn, Levin et Gregory, "A butterfly subdivision scheme for surface interpolation with tension control" ("Procédé de subdivision en papillon pour l'interpolation de surface avec contrôle de tension"), ACM Transactions on Graphics 9, 2 (Avril 90), 160-169), ou par approximation.

Loop ( "Smooth Surface Subdivision based on Triangles" ("Subdivision régulière de surface mettant en oeuvre des triangles"), University of Utah, Department of Mathematics, Master's Thesis, 1987) a proposé, en 1987, une méthode de génération de maillages triangulaires par subdivision globale 1 vers 4. La surface ainsi obtenue possède alors une C²-différentiabilité sur chacun de ses sommets, sauf sur les sommets extraordinaires du maillage original qui présentent une C¹- différentiabilité (on définit un sommet ordinaire comme un sommet possédant une valence égale à 6, et un sommet extraordinaire d'un maillage triangulaire, comme un sommet possédant une valence différente de 6).

Par la suite, Hoppe (Hoppe et al., "Piecewise Smooth Surface Reconstruction" ("Reconstruction régulière de surface par morceaux"), SIGGRAPH 94 Conference Proceedings) a développé en 1994 une version adaptative de la méthode proposée par Loop. La mise en oeuvre d'une telle technique permet d'obtenir une surface qui conserve et reconstruit les singularités géométriques telles que les arêtes vives, les coins et les dards des objets. On construit ainsi une surface lisse par morceaux possédant une continuité sur les courbes composant les arêtes vives, tout en fournissant une différentiabilité sur les éléments de surface composant le maillage.

Un inconvénient de ces techniques de l'art antérieur est qu'elles ne permettent pas d'adapter l'image au point de vue d'un observateur virtuel. En effet, de telles techniques ne prennent notamment pas en compte les silhouettes (par silhouette, on entend ici l'ensemble des arêtes du maillage partageant deux faces, dont l'une est orientée face à une caméra virtuelle, et l'autre est d'orientation opposée), la pyramide de vision et l'orientation des faces des objets vis-à-vis d'une caméra ou de l'oeil d'un observateur. Il en résulte notamment un "surcodage" de zones peu ou non visibles, ou moins pertinentes, au détriment de zones importantes sur le plan visuel.

Un autre inconvénient de ces techniques de l'art antérieur est qu'elles ne permettent pas de faire cohabiter différents niveaux de détail sur un maillage triangulaire représentatif d'un objet.

Encore un autre inconvénient de ces techniques de l'art antérieur est qu'elles ne permettent pas d'optimiser le ratio de la qualité perceptuelle à la quantité d'information nécessaire (c'est-à-dire au nombre de triangles nécessaires à la visualisation d'une image sur un terminal graphique, par exemple).

Ces techniques ont encore pour inconvénient, pour la plupart, de mettre en oeuvre un opérateur de subdivision 1 vers 4. Un tel opérateur présente en effet un coefficient multiplicatif de 4, ce qui limite la cohabitation harmonieuse des différentes densités de détail au sein de l'image, et génère une représentation de l'objet à granularité grossière. De plus, si l'on souhaite affiner la granularité de l'objet, ces techniques deviennent très vite coûteuses en mémoire.

L'invention a notamment pour objectif de pallier ces inconvénients de l'art antérieur.

Plus précisément, un objectif de l'invention est de fournir un procédé de raffinement visuellement continu de maillages triangulaires.

Un autre objectif de l'invention est de mettre en oeuvre un procédé de raffinement de maillages triangulaires dépendant du point de vue d'un observateur virtuel.

L'invention a encore pour objectif de fournir un procédé de raffinement de maillages triangulaires permettant d'optimiser le ratio de la qualité perceptuelle à la quantité d'information.

L'invention a également pour objectif de mettre en oeuvre un procédé de raffinement de maillages triangulaires particulièrement bien adapté aux surfaces courbes.

Encore un autre objectif de l'invention est de fournir un procédé de raffinement de maillages triangulaires adapté aux surfaces comportant des zones angulaires à conserver, et permettant de préserver des singularités géométriques telles que des coins ou des arêtes vives.

L'invention a encore pour objectif de mettre en oeuvre un procédé de raffinement de maillages triangulaires rapide, robuste et réversible.

Un autre objectif de l'invention est de fournir un procédé de raffinement de maillages triangulaires simple et peu coûteux à mettre en oeuvre.

Encore un autre objectif de l'invention est de mettre en oeuvre un procédé de raffinement de maillages triangulaires pouvant être adapté au terminal sur lequel l'image ou la séquence d'images est synthétisée, puis visualisée.

L'invention a encore pour objectif de fournir un procédé de raffinement de maillages triangulaires permettant d'obtenir une granularité fine de raffinement.

L'invention a également pour objectif de mettre en oeuvre un procédé de raffinement de maillages triangulaires permettant d'obtenir une cohabitation harmonieuse de différents niveaux de détail au sein de l'image visualisée.

Ces objectifs, ainsi que d'autres qui apparaîtront par la suite sont atteints à l'aide d'un procédé de raffinement d'un maillage triangulaire représentatif d'un objet en trois dimensions (3D), ledit maillage étant constitué d'un arrangement de sommets et de faces triangulaires, définies chacune par trois références aux sommets qu'elle relie, et présentant trois arêtes reliant chacune deux desdits sommets.

Un tel procédé comprend, selon l'invention, une étape de sélection d'au moins une région d'intérêt, ledit raffinement du maillage étant effectué localement sur ladite au moins une région d'intérêt.

Ainsi, l'invention repose sur une approche tout à fait nouvelle et inventive du raffinement d'un maillage triangulaire représentatif d'un objet en trois dimensions. En effet, l'invention repose notamment sur la mise en oeuvre d'un raffinement localisé sur les régions perceptuellement pertinentes des objets, et non sur un raffinement global de l'ensemble du maillage. Une telle localisation du raffinement sur certaines régions d'intérêt permet ainsi d'optimiser le ratio qualité perceptuelle sur quantité d'information produite, seules les régions perceptuellement importantes étant fortement traitées.

Avantageusement, un tel procédé selon l'invention comprend en outre une étape de subdivision hybride d'au moins certaines desdites faces triangulaires, mettant en oeuvre une opération de subdivision 1 vers 3 barycentrique, de manière à diviser chacune desdites faces en trois faces triangulaires par l'ajout d'un sommet.

Une subdivision 1 vers 3 présente en effet un coefficient multiplicatif inférieur aux coefficients des techniques de l'art antérieur (généralement 4) et permet ainsi d'obtenir une granularité plus fine des images. Le coût mémoire, évalué en nombre de triangles nécessaires à la constitution du maillage, est également moindre et croît moins rapidement qu'avec un opérateur de subdivision un vers quatre.

Selon une première caractéristique avantageuse de l'invention, un tel procédé comprend en outre une étape de permutation d'arêtes d'au moins certaines desdites faces triangulaires subdivisées, consistant à supprimer chaque arête de la face triangulaire avant subdivision et à la remplacer par une arête reliant le sommet ajouté au sommet opposé à l'arête supprimée de la face triangulaire adjacente.

La mise en oeuvre d'une opération de permutation d'arêtes, combinée à la subdivision 1 vers 3 barycentrique permet, en effet, une cohabitation harmonieuse des différents niveaux de détail induits par la réalisation d'un raffinement local du maillage. De plus, la subdivision triangulaire 1 vers 3 incrémentant la valence des sommets du maillage original (c'est-à-dire le nombre d'arêtes arrivant aux sommets), l'opération de permutation d'arête permet simultanément d'éviter une dégénérescence des triangles constitutifs du maillage.

Préférentiellement, ladite étape de sélection est mise en oeuvre par un opérateur et/ou selon un critère de détection prédéterminé.

En effet, les régions d'intérêt peuvent être définies explicitement par un opérateur (c'est-à-dire un utilisateur du terminal sur lequel est visualisée l'image source, ou un infographiste par exemple) et/ou déduites d'une phase de détection des régions jugées visuellement pertinentes, telles que les régions à fort gradient d'éclairage, ou les silhouettes, par exemple.

Avantageusement, lorsque ladite étape de sélection est mise en oeuvre selon un critère de détection prédéterminé, ladite au moins une région d'intérêt appartient au groupe comprenant :
- des faces triangulaires situées à l'intérieur d'une pyramide de vision définie par l'oeil d'un observateur et une fenêtre de visualisation ;
- des faces triangulaires orientées face à l'oeil d'un observateur ;
- des faces triangulaires adjacentes à un ensemble d'arêtes partageant chacune deux faces triangulaires, une première face étant orientée face à l'oeil d'un observateur et une seconde face étant d'orientation opposée ;
- des faces triangulaires appartenant à des zones animées dudit objet (les lèvres d'un clone virtuel, les arcades sourcilières lors d'une mimique d'un personnage, etc.).

Ainsi, les régions d'intérêt sélectionnées sont des régions jugées visuellement pertinentes pour un observateur du maillage. Il peut en effet sembler inutile de raffiner les zones du maillage qui ne sont pas ou peu visibles de l'observateur, compte tenu du point de vue courant. Les régions d'intérêt sélectionnées peuvent également être les silhouettes des objets observés, qui jouent un rôle privilégié dans les processus cognitifs. Il est en effet particulièrement important de raffiner les surfaces courbes de la silhouette de l'objet, qui apparaissent sous une forme polygonale lorsqu'elles sont décrites de manière trop succincte par un réseau de mailles.

Les régions d'intérêt peuvent aussi être des régions animées de l'objet visualisé, le regard d'un observateur se fixant préférentiellement sur de telles régions.

Selon une deuxième caractéristique avantageuse de l'invention, un tel procédé comprend en outre une étape de filtrage de la position avant subdivision d'au moins certains desdits sommets du maillage.

Un tel filtrage de la géométrie du maillage permet ainsi d'obtenir des contraintes différentielles de type C² sur la région d'intérêt obtenue après une infinité de subdivisions triangulaires 1 vers 3. Il permet notamment d'adoucir les silhouettes des objets raffinés.

Selon une technique avantageuse, ladite étape de filtrage de la position avant subdivision d'un sommet du maillage tient compte de la valence dudit sommet et de la valence de ses sommets voisins, la valence étant le nombre d'arêtes arrivant à un sommet.

Selon un mode de réalisation préférentiel de l'invention, ladite étape de filtrage met en oeuvre un calcul de coefficients de pondération pour chaque valence, obtenu par analyse du comportement asymptotique d'une matrice de subdivision globale stochastique.

Avantageusement, un tel procédé selon l'invention met en oeuvre au moins une contrainte permettant d'interdire la mise en oeuvre de ladite étape de subdivision sur une face donnée et/ou de ladite étape de permutation sur une arête donnée et/ou de ladite étape de filtrage sur un sommet donné.

En effet, on peut souhaiter ajouter des contraintes sur la surface de l'objet observé si l'on considère que certaines régions de l'image ne doivent pas être modifiées. On peut notamment souhaiter conserver les singularités géométriques de l'objet, telles que les coins ou les arêtes vives par exemple.

Selon un mode de réalisation avantageux de l'invention, ladite au moins une contrainte permet d'interdire la mise en oeuvre d'une étape appartenant au groupe comprenant :
- une étape de permutation d'une arête vive;
- une étape de filtrage de la position d'un sommet formant un coin ;
- une étape de subdivision d'une face triangulaire située sur une région plane dudit objet (le raffinement est alors inutile).

En interdisant de subdiviser une face triangulaire située sur une région plane de l'objet, on évite ainsi la mise en oeuvre d'opérations coûteuses et inutiles, tout en privilégiant la restitution perceptuelle.

Pour mettre en oeuvre ces différentes contraintes, on peut envisager de faire précéder le procédé de raffinement selon l'invention d'une phase préalable de détection des singularités géométriques correspondantes.

Selon un mode de réalisation préférentiel de l'invention, un tel procédé met en oeuvre une étape de lissage d'au moins une arête vive, consistant à entrelacer un processus d'approximation de courbe avec un processus d'approximation de surfaces, mettant en oeuvre une opération de subdivision de ladite arête vive et/ou une opération de filtrage.

En effet, une telle opération de lissage permet d'atténuer l'aspect polygonal qu'ont les arêtes vives lorsqu'elles sont décrites de manière trop succincte par un réseau de mailles, et donc d'accroître la qualité perceptuelle de l'image.

Préférentiellement, un tel procédé comprend en outre une étape d'interpolation des normales et/ou des positions des sommets entre les positions initiale et finale desdits sommets ajoutés.

On obtient ainsi une continuité du raffinement, qui s'effectue sans artefacts visuels ni modifications brusques de la géométrie des surfaces de l'objet considéré. Un observateur assiste donc à un raffinement visuellement continu de l'image affichée sur l'écran de son terminal.

L'invention concerne également un maillage triangulaire représentatif d'un objet en trois dimensions obtenu selon un procédé de raffinement tel que décrit ci-dessus, et les applications d'un tel procédé.

L'invention concerne encore un système de transmission d'un maillage triangulaire, ainsi qu'un dispositif de décodage d'un maillage triangulaire et une terminal de visualisation d'une représentation d'un objet en trois dimensions.

L'invention concerne également un procédé de raffinement du codage d'une image, comprenant une étape de sélection d'au moins une silhouette de ladite image, ledit raffinement du codage de ladite image étant effectué localement sur ladite au moins une silhouette.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique des différentes étapes mises en oeuvre au cours du procédé de raffinement de maillages triangulaires selon l'invention ;
- la figure 2 illustre un exemple de pyramide de vision, utilisée pour déterminer les régions visuellement pertinentes pouvant être raffinées selon le procédé de la figure 1 ;
- les figures 3a et 3b décrivent un premier critère de sélection des régions d'intérêt raffinées selon le procédé de la figure 1 ;
- la figure 4 présente la définition classique d'une silhouette ;
- les figures 5a et 5b illustrent une définition étendue de la silhouette présentée en figure 4 ;
- la figure 6 présente un exemple de subdivision hybride et de permutation d'arêtes d'une face d'un maillage triangulaire, selon le procédé illustré en figure 1 ;
- les figures 7 à 10 décrivent un exemple de réalisation du filtrage de la position avant subdivision d'un sommet de valence 5 (à titre d'exemple) du maillage triangulaire ;
- les figures 11a et 11b illustrent l'ajout de contraintes permettant d'interdire la mise en oeuvre de certaines étapes du procédé de raffinement de la figure 1 ;
- les figures 12 et 13 présentent un exemple de réalisation d'une étape de lissage d'une arête vive ;
- les figures 14a et 14b illustrent respectivement des exemples de réalisation d'une subdivision 1 vers 3 centrée et d'une interpolation géométrique de la position des sommets du maillage ;
- la figure 15 présente un exemple de réalisation d'une interpolation des normales lors de la double opération de subdivision et de filtrage ;
- la figure 16 décrit un exemple de réalisation d'une interpolation des normales lors de la permutation d'arêtes ;
- les figures 17a à 17c illustrent les résultats obtenus par la mise en oeuvre du procédé selon l'invention pour le raffinement d'une sphère ;
- les figures 18a à 18c présentent les résultats obtenus par la mise en oeuvre du procédé selon l'invention pour le raffinement d'un maillage représentatif d'un visage ;
- les figures 19a à 19c illustrent le comportement adaptatif du procédé selon l'invention sur un maillage comportant des arêtes vives à subdiviser.

Le principe général de l'invention repose sur un raffinement local adaptatif de maillages triangulaires, mettant en oeuvre une technique de subdivision localisée des maillages, combinée à un filtrage des positions des sommets.

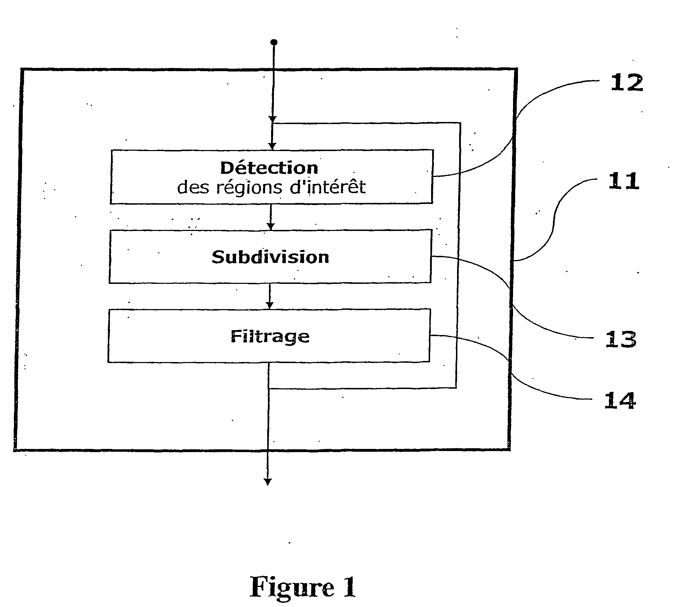

On présente, en relation avec la figure 1, un mode de réalisation d'un tel procédé de raffinement selon l'invention.

La technique mise en oeuvre selon l'invention utilise itérativement un algorithme générique de raffinement adaptatif 11, comprenant quatre étapes principales :
- une étape non représentée de réception d'un objet maillé, par exemple selon une technique similaire à celle décrite dans la demande de brevet française FR 9907608, au nom des mêmes titulaires que la présente demande de brevet, et ayant pour titre "Procédé de codage d'un maillage par conquête sur les arêtes, privilégiant un sommet complet en tant que pivot, et procédé de décodage correspondant" ;
- une étape référencée 12 de détection d'au moins une région d'intérêt, par exemple dépendant d'un point de vue ;
- une étape référencée 13 de subdivision hybride d'au moins certaines faces du maillage triangulaire ;
- une étape référencée 14 de filtrage adaptatif de la géométrie du maillage.

L'étape 12 de détection d'au moins une région d'intérêt de l'image source peut être définie explicitement par l'utilisateur (par exemple, une région de l'image sur laquelle il est intéressant de zoomer) ou déduite d'une phase de détection des régions jugées visuellement pertinentes au sein de l'image source.

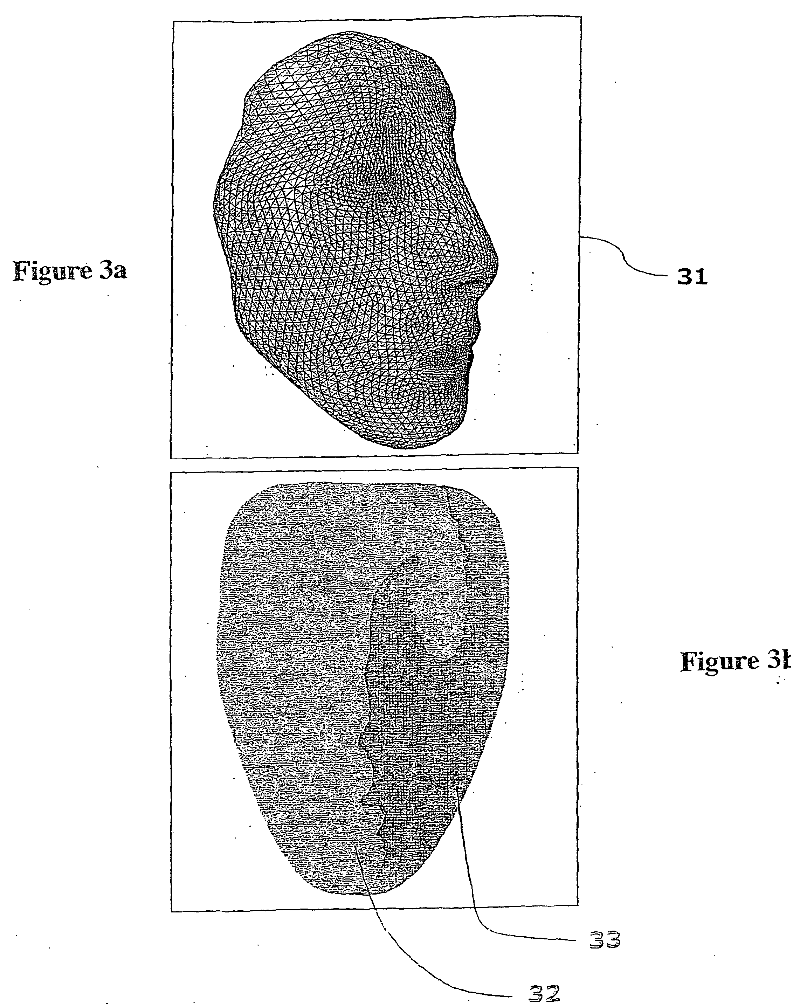

Une telle phase de détection nécessite d'introduire un point de vue 31, illustré en figure 3a. Un tel point de vue 31 peut être une caméra virtuelle, définie par exemple par son centre, et une pyramide de vision formée par l'oeil d'un observateur et la fenêtre de visualisation de l'image.

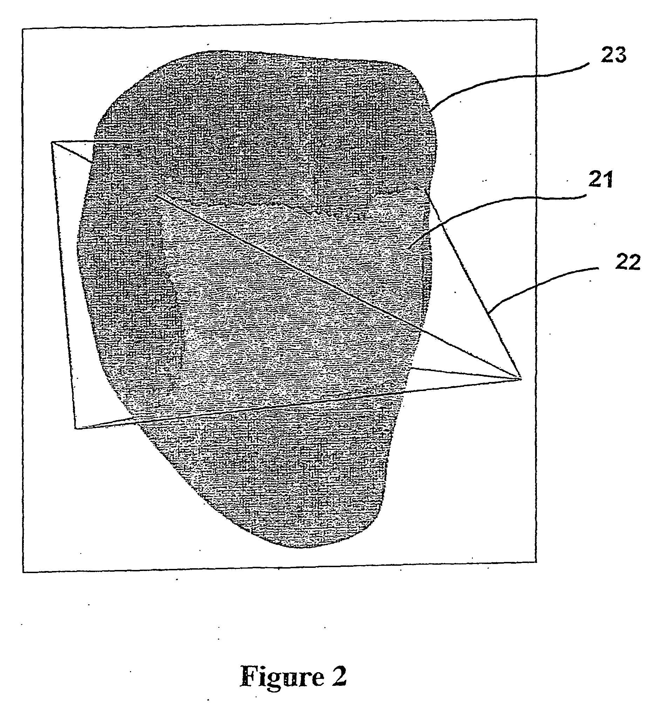

Le point de vue 31 étant défini, les régions d'intérêt peuvent alors être sélectionnées parmi les régions suivantes de l'image source :
- les faces 21 du maillage de l'image 23 situées à l'intérieur de la pyramide de vision 22, représentées en figure 2 ;
- les faces 32 orientées face à la caméra ou au point de vue 31, les autres faces 33 n'étant pas visibles de l'utilisateur, par convention avec les infographistes chargés du traitement de l'image source (de telles faces sont illustrées en figure 3) ;
- les faces appartenant à la silhouette de l'objet représenté.

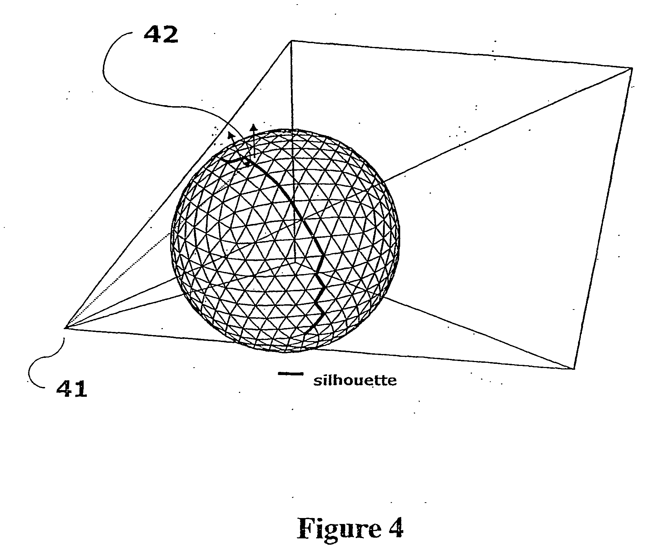

Une définition classique de la silhouette d'un objet est illustrée en figure 4. L'objet représenté ici est une sphère, visualisée à l'aide d'une caméra 41. Une arête du maillage représentatif de la sphère appartient à la silhouette 42 si elle partage deux faces, dont l'une est orientée face à la caméra 41, et l'autre est d'orientation opposée.

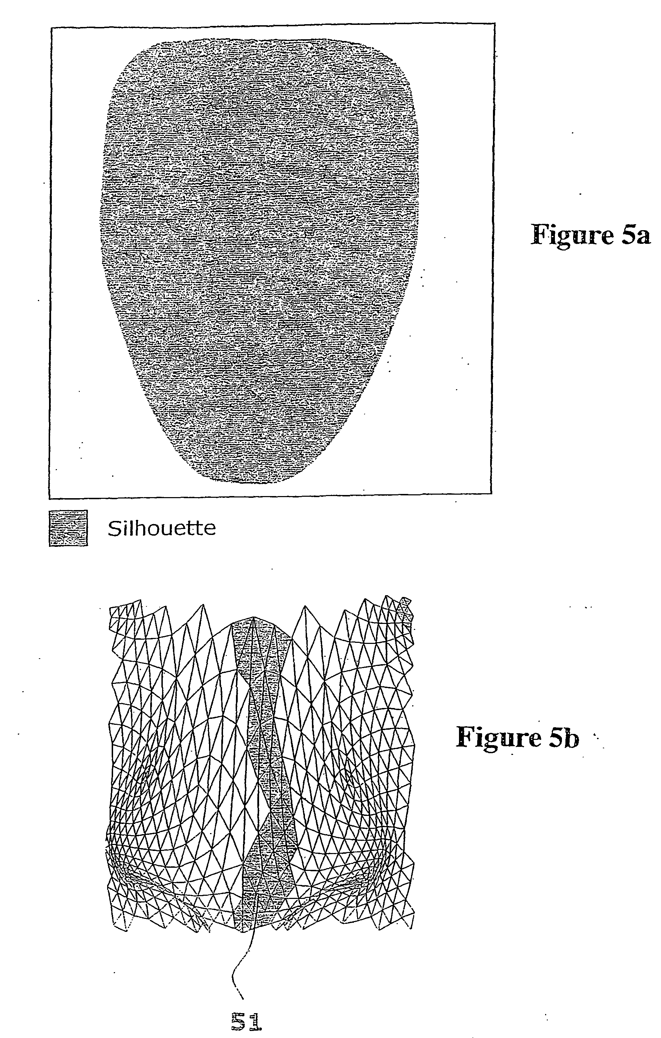

Les figures 5a et 5b présentent une définition élargie de la silhouette d'un objet. Notamment, la figure 5b présente un détail de la silhouette illustrée en figure 5a. Ici, et dans toute la suite du document, on entend par silhouette la bande de triangles 51 adjacents au sous-ensemble des arêtes formant la silhouette du maillage (au sens classique du paragraphe précédent) pour le point de vue courant.

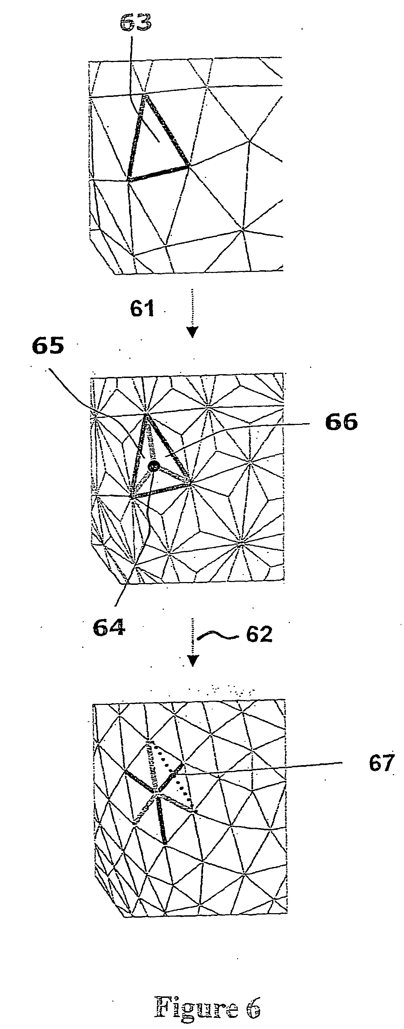

Après sélection d'une région d'intérêt au cours de l'étape référencée 12, on opère une subdivision hybride 13 sur les faces du maillage comprises dans la région d'intérêt sélectionnée. Une telle subdivision est illustrée en figure 6.

Le maillage est itérativement raffiné par subdivision un vers trois 61 de ses éléments et par permutation 62 des arêtes du maillage original, afin d'éviter une dégénérescence des triangles constitutifs du maillage. En effet, la subdivision triangulaire un vers trois a pour effet d'incrémenter la valence des sommets du maillage original, c'est-à-dire le nombre d'arêtes arrivant aux sommets du maillage, et la permutation 62 permet ainsi de pallier à la dégénérescence du maillage.

Une face 63 est donc subdivisée en trois faces par insertion d'un sommet 64 en son centre, et par création de deux nouvelles faces 65 et 66.

On opère ensuite une permutation en supprimant les arêtes de la face 63 avant subdivision et en créant trois nouvelles arêtes 67 qui joignent le sommet inséré 64 aux sommets des faces adjacentes à la face 63 opposés aux arêtes supprimées.

A l'issue de l'étape 13 de subdivision, on met en oeuvre une étape 14 de filtrage adaptatif de la géométrie du maillage.

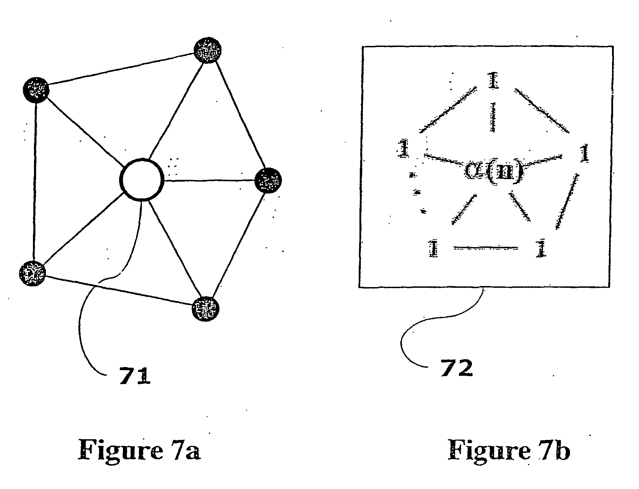

Un telle étape de filtrage adaptatif 14 consiste, à chaque étape 13 de subdivision, à positionner les sommets du maillage original de manière à obtenir des contraintes différentielles de type C¹ ou C² différentiables sur la région d'intérêt obtenue après une infinité de subdivisions. Par exemple, selon la figure 7a, la nouvelle position du sommet 71 de valence 5 est déduite de sa position initiale et des positions de ses 5 sommets adjacents dans le maillage initial par le biais des coefficients de filtrage 72 illustrés en figure 7b. En d'autres termes, on recalcule la position d'un sommet 71 donné en réalisant une sommation des positions pondérées de ses sommets voisins et de lui-même. Ainsi, sur la figure 7b, n représénte la valence du sommet 71, et α(n) correspond au coefficient de pondération mis en oeuvre.

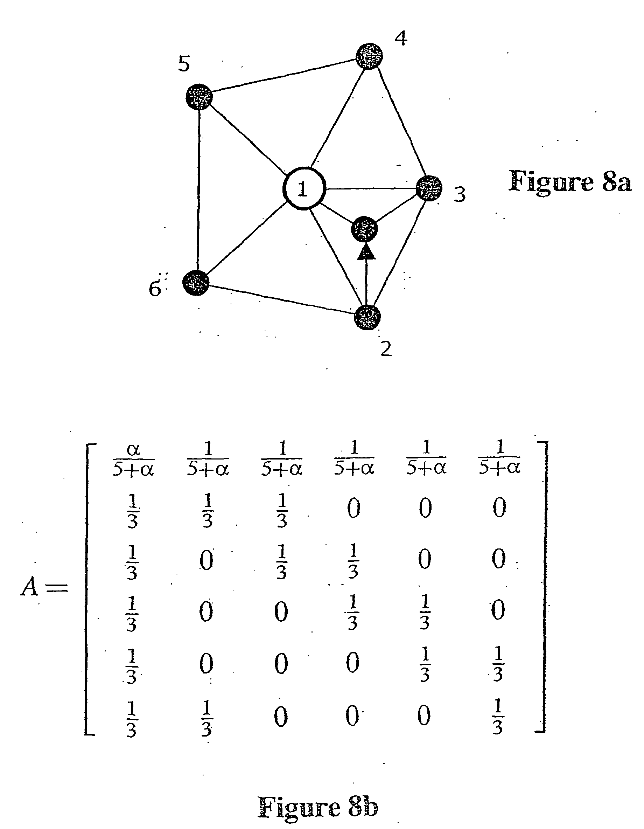

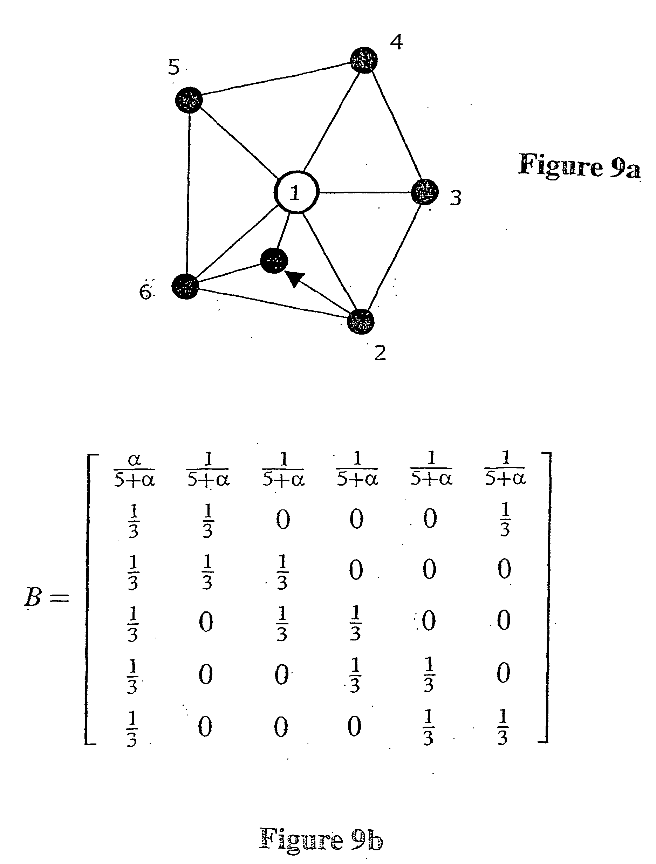

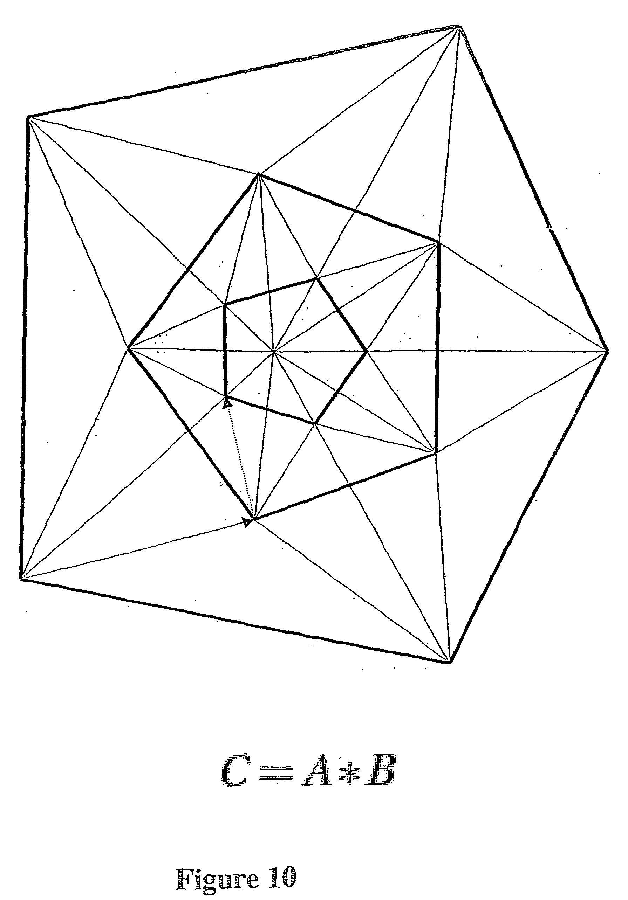

Le calcul des coefficients de pondération α(n) pour chaque valence n s'obtient par l'analyse du comportement asymptotique d'une matrice de subdivision globale stochastique C, obtenue par numérotation des sommets et l'expression matricielle de deux itérations de subdivision un vers trois successives d'orientation inverse représentées en figures 8a et 9a. Cette expression se formalise par la création de deux matrices A et B illustrées respectivement en figure 8b et 9b. Les matrices A, B et C sont ainsi liées par la relation C=A*B conformément à la figure 10. Les valeurs propres multiples de la matrice C sont ensuite obtenues sous une forme symbolique, et les contraintes différentielles recherchées sur la région d'intérêt sont obtenues par la résolution de l'équation λ₁ ²=λ₃ (où λ₁ et λ₃ sont des valeurs propres de C) après ordonnancement décroissant des valeurs propres, ainsi que décrit par Hartmut Prautzsch dans le document "Smoothness of subdivision surfaces at extraordinary points" ("Régularité des surfaces de subdivision aux points extraordinaires", Adv. In Comp. Math., pages 377-390, vol. 9, 1998).

Le pseudo-code suivant décrit le processus de subdivision hybride avec filtrage d'une région d'intérêt d'un maillage M :

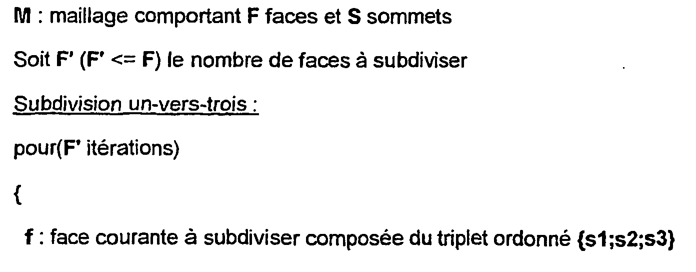

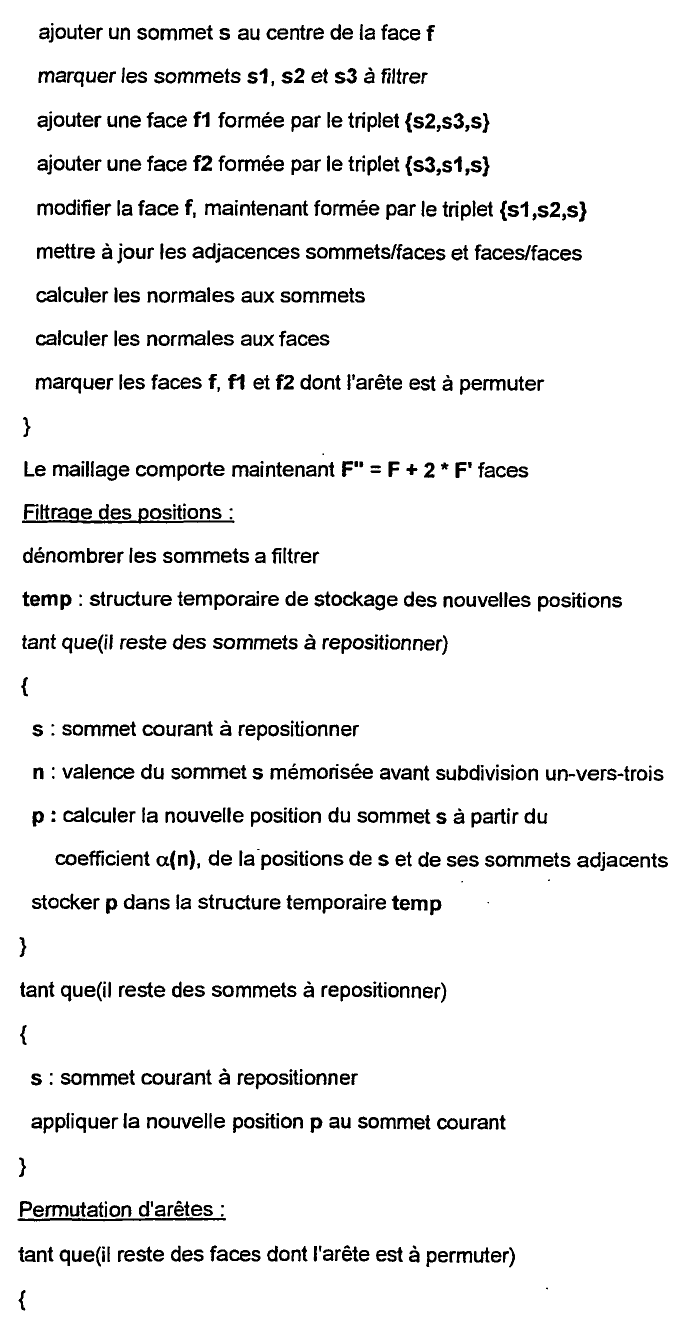

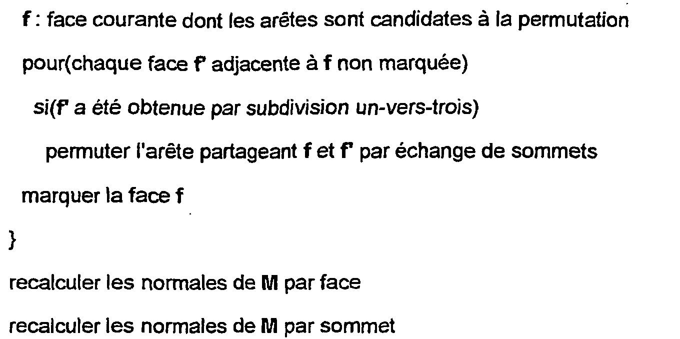

Lorsqu'on souhaite que certaines régions de l'objet ne soient pas modifiées au cours des différentes étapes du procédé de raffinement selon l'invention, on peut ajouter certaines contraintes sur la surface de l'objet considéré, ainsi qu'illustré en figure 11a.

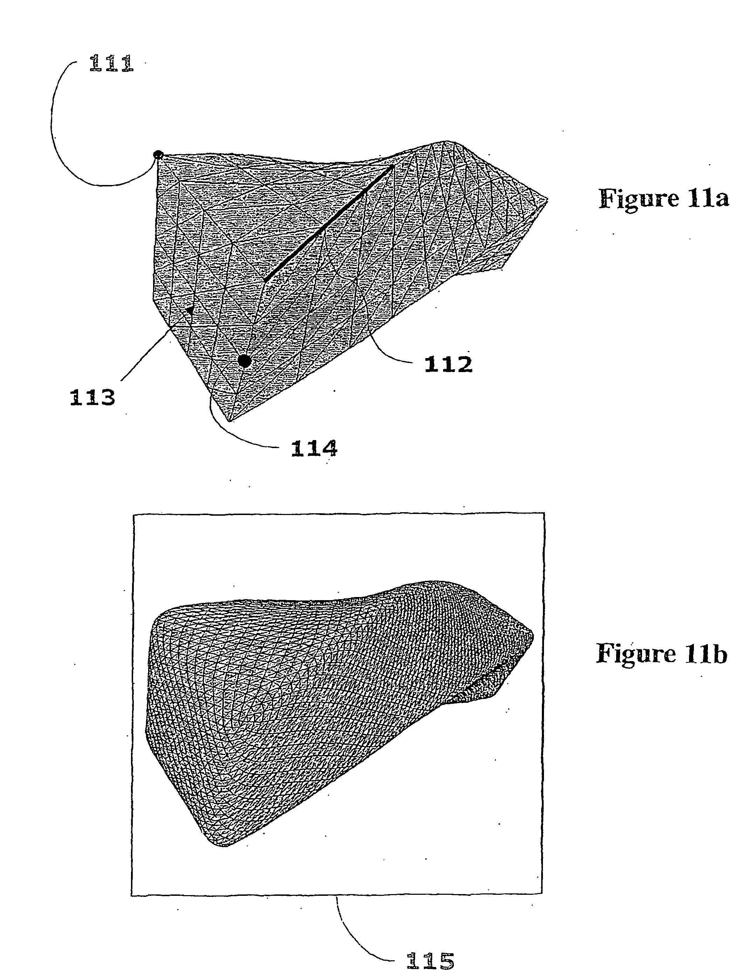

Ainsi, on peut vouloir conserver les arêtes vives 112 et les coins 111, de manière à obtenir une représentation de l'objet considéré plus proche de la réalité que le maillage 115 de la figure 11b, dans lequel les arêtes vives 112 et les coins 111 ont été supprimés. Dans ce dessein, il faut marquer les arêtes, les sommets ou les faces respectivement à ne pas permuter, déplacer ou subdiviser.

Le procédé de raffinement peut ainsi être précédé d'une phase préalable (interactive ou automatique) de détection des coins, des arêtes vives ou des régions planes.

On pourrait par exemple interdire :
- la permutation des arêtes vives 112 ;
- le déplacement des sommets 111 formant des coins du maillage ;
- la subdivision des faces 113 situées sur une région plane du maillage.
En effet, une telle subdivision est inutile et ne permet pas de raffiner le maillage considéré.

On peut, par ailleurs, souhaiter raffiner un maillage en lissant une arête vive 112 dans sa propre direction, afin d'obtenir une courbe d'aspect moins polygonal. On interpole alors la courbe formée par les sommets classifiés sur une arête vive régulière, tels que le sommet 114. On entrelace donc un processus d'approximation de courbe (à savoir l'arête vive régulière considérée, à laquelle appartient le sommet 114) avec une approximation de surfaces.

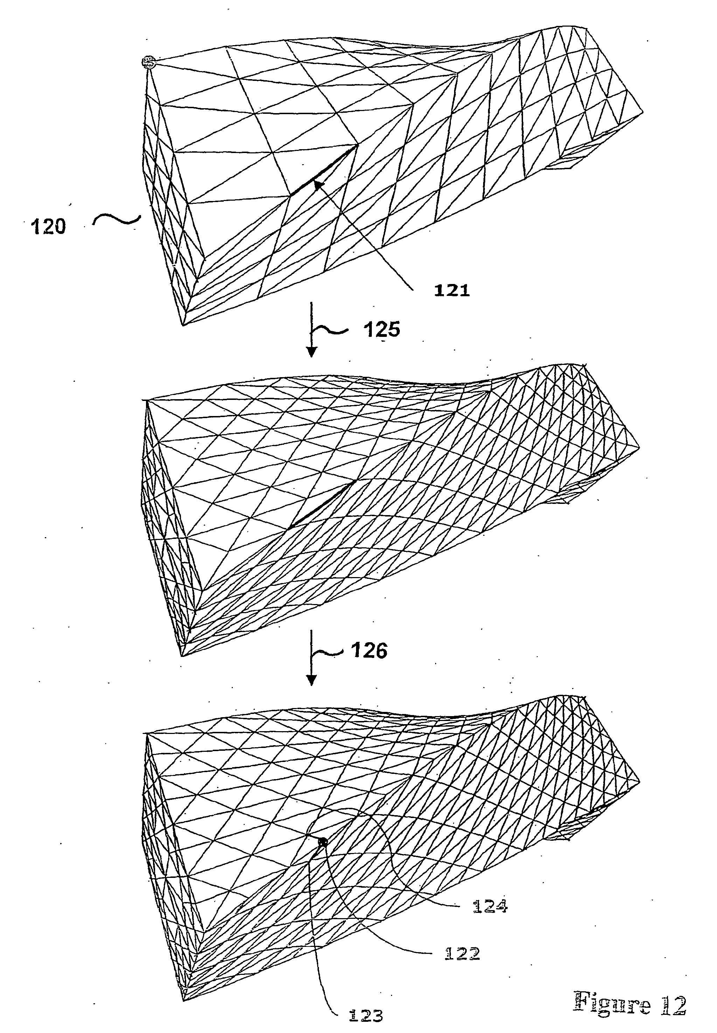

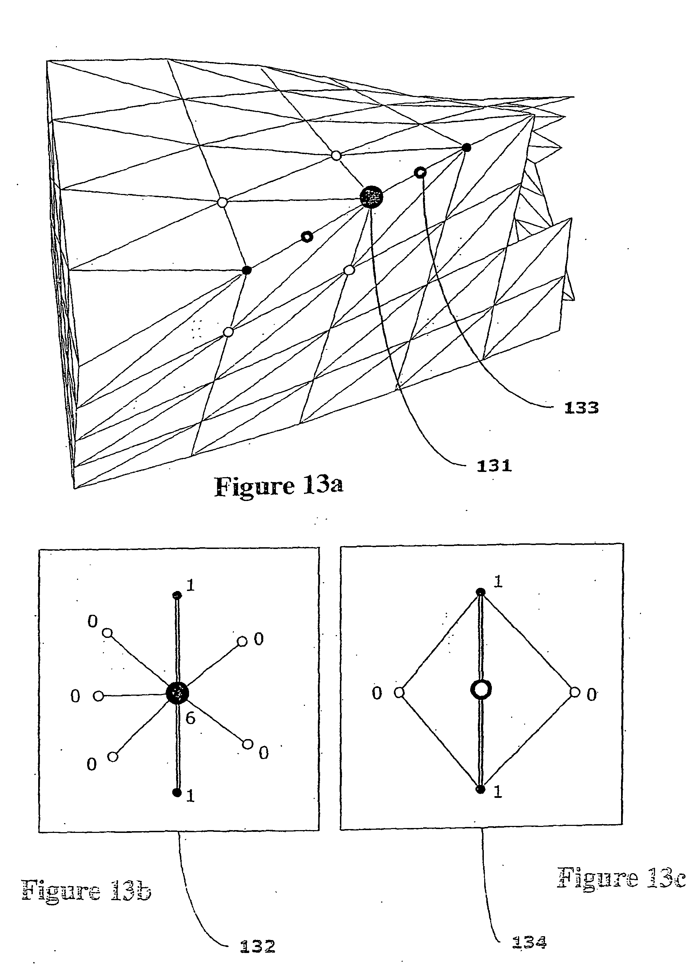

On décrit plus en détails cette opération de lissage d'une arête vive en relation avec les figures 12 et 13a à 13c. Une telle opération nécessite la mise en oeuvre d'un opérateur de subdivision de l'arête vive régulière 121 et d'un opérateur de filtrage.

On considère le maillage triangulaire 120 de la figure 12. Au cours d'une étape référencée 125, on opère une subdivision un vers trois du maillage 120, ainsi qu'une permutation des arêtes, selon une technique similaire à celle décrite précédemment dans ce document. On notera qu'une contrainte est appliquée sur l'arête vive 121, de manière à interdire sa permutation au cours du raffinement du maillage.

Au cours d'une étape référencée 126, on opère ensuite une subdivision barycentrique de l'arête vive régulière 121 par insertion d'un sommet 122 et de deux arêtes de régularisation 123 et 124. Ainsi, un sommet 131, illustré en figure 13a, appartenant à une arête vive régulière (donc avec deux arêtes vives adjacentes) est positionné suivant le masque de pondération 132 représenté en figure 13b, tandis que le nouveau sommet 133 inséré sur l'arête vive est positionné suivant le masque de pondération 134 de la figure 13c, c'est-à-dire au milieu de l'arête avant le déplacement des sommets du maillage original.

On obtient ainsi un effet de lissage des arêtes vives, qui ont donc un aspect moins polygonal.

Il est également très important que le raffinement du maillage représentatif de l'objet considéré s'effectue sans artefacts visuels ni modifications brusques de la géométrie des surfaces, de manière à ne pas être perceptible, ou à être peu perceptible, pour un observateur visualisant l'objet sur un terminal adapté. Notamment, la subdivision hybride combinée au filtrage de la géométrie du maillage doit s'effectuer de manière visuellement continue.

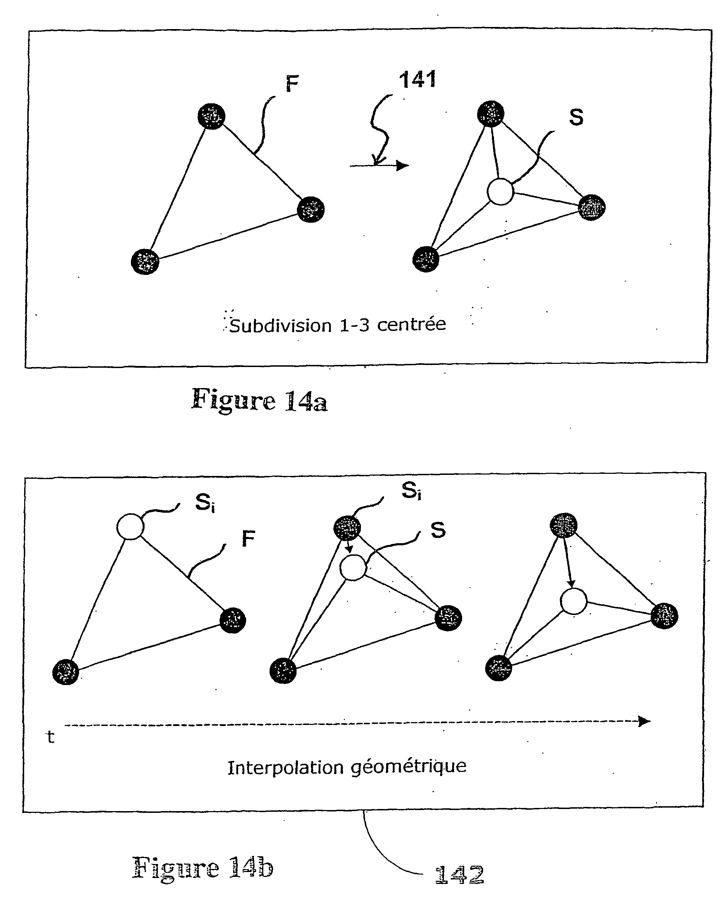

Dans le mode de réalisation décrit dans la suite du document, la continuité du raffinement est obtenue par interpolation conjointe de la géométrie du maillage et des normales au cours du temps, ainsi qu'illustré par les figures 14a, 14b, 15 et 16.

Selon l'invention, la subdivision hybride se décompose en trois étapes :
- une subdivision un vers trois centrée 141, illustrée en figure 14a ;
- un filtrage des positions ;
- une permutation des arêtes.

Ainsi, selon la figure 14b, l'insertion d'un sommet S au centre d'une face F consiste à insérer un sommet S en le superposant à l'un des trois sommets de la face F considérée, appelé Sᵢ, et choisi arbitrairement, et à créer deux nouvelles faces correspondantes. L'interpolation géométrique est ensuite réalisée par interpolation linéaire 142 entre les positions initiale et finale du sommet S, et entre les positions initiales et après filtrage des sommets du maillage original.

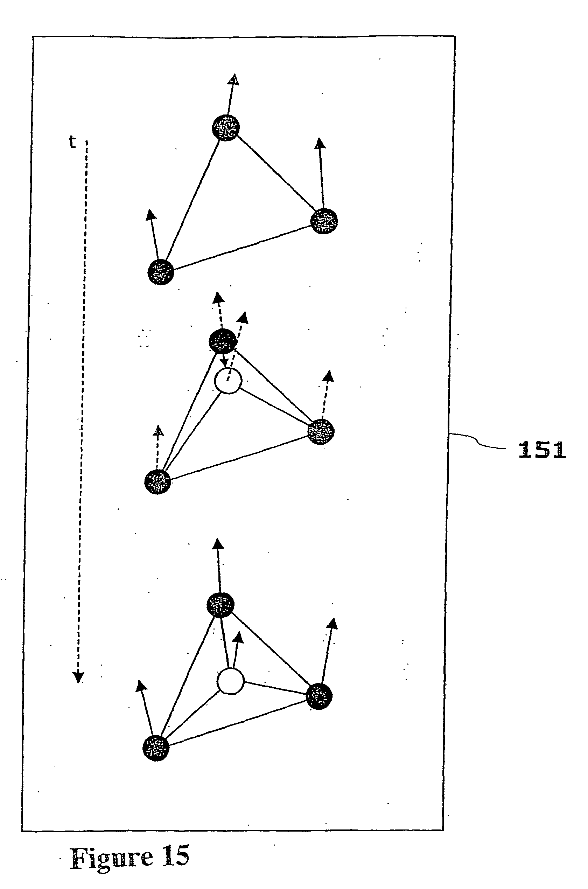

Cette interpolation s'effectue en simultanéité avec une interpolation des normales 151 des sommets situés dans la région concernée par la subdivision, le sommet S héritant au départ de la normale au sommet Sᵢ. Une telle opération d'interpolation des normales est illustrée en figure 15, et nécessite la calcul des normales après simulation de la double opération subdivision/filtrage.

L'interpolation des normales peut s'effectuer sous une forme linéaire. Elle peut bien sûr également s'effectuer sous toute autre forme adaptée, telle que, par exemple, l'interpolation sur la sphère unité.

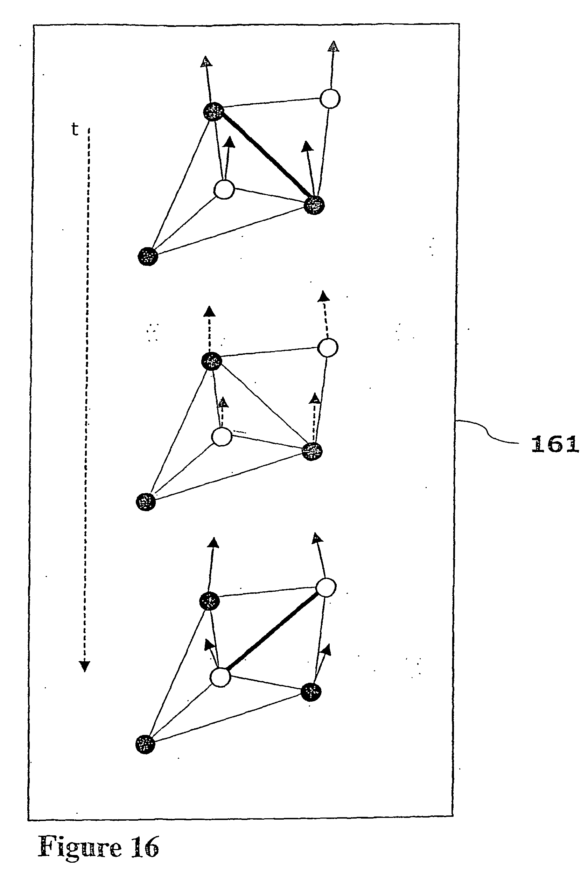

Selon un mode de réalisation préférentiel de l'invention, la permutation d'arête, illustrée en figure 16, n'est opérée que lors de l'affichage de la dernière itération de l'interpolation 161, de manière à rendre la modification visuelle imperceptible pour un observateur.

On décrit désormais un exemple de réalisation de l'invention, consistant à appliquer la technique de subdivision décrite précédemment à des maillages composant les objets d'une scène tridimensionnelle.

Seuls neuf coefficients de filtrage α(3...11), définis par le tableau ci-dessous, sont calculés, les sommets de valence supérieure ou égale à 12 n'étant pas déplacés au cours de la subdivision. En effet, la distribution des valences d'un maillage est généralement centrée sur la valeur 6, et les sommets de valence supérieure à 11 sont rares.

| Valence n | α(n) |
|---|---|
| 3 | 1.5 |
| 4 | 5 |
| 5 | 8.30585 |
| 6 | 12 |
| 7 | 15.8839 |
| 8 | 19.844526 |
| 9 | 23.8213 |
| 10 | 27.7839 |
| 11 | 31.221 |

Les nombres d'itérations de subdivision **v et** s, respectivement dans le champ de vision et sur la silhouette de l'objet, sont fixés par l'utilisateur en fonction des capacités graphiques du terminal utilisé, et de la qualité d'interpolation géométrique souhaitée.

Il peut également s'avérer judicieux de raffiner les régions adjacentes aux silhouettes, jusqu'à l'obtention d'une longueur d'arête inférieure à la résolution du périphérique de sortie (en l'occurrence, un pixel).

Le pseudo-code suivant décrit le raffinement adaptatif mis en oeuvre;

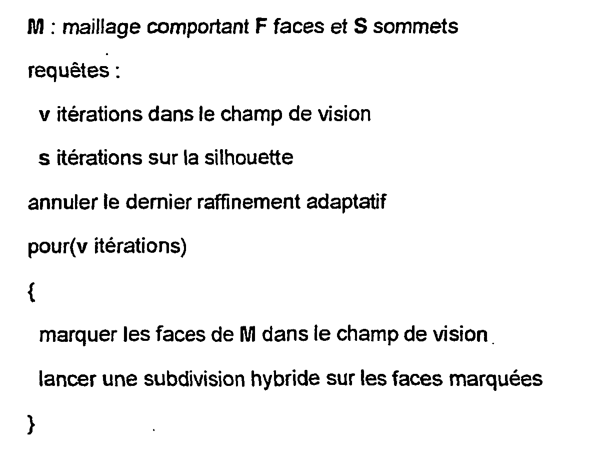

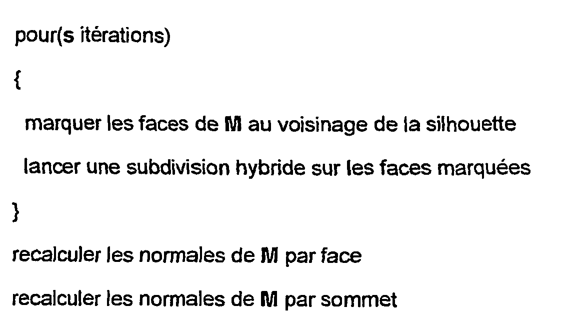

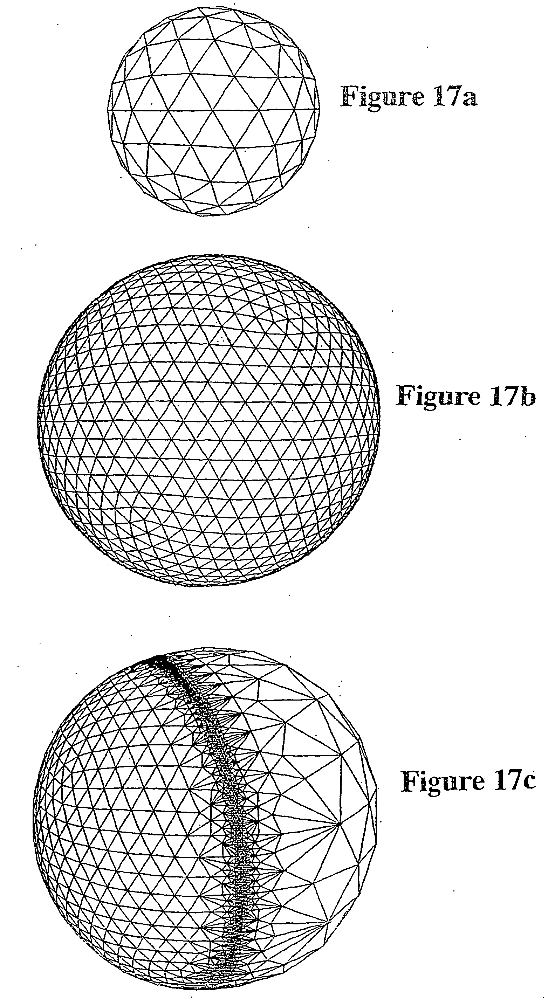

Les figures 17 à 19 présentent des résultats obtenus à partir du procédé de raffinement selon l'invention.

Ainsi, les figures 17a à 17c illustrent un exemple de mise en oeuvre du procédé de raffinement selon l'invention sur un objet sphérique, présenté en figure 17a. Les maillages des figures 17b et 17c sont obtenus après deux itérations du procédé dans le champ de vision d'un observateur, et après cinq itérations sur la silhouette de la sphère. On remarque en figure 17b que l'aspect polygonal du contour de la sphère illustrée en figure 17a s'est sensiblement estompé grâce au procédé de raffinement selon l'invention.

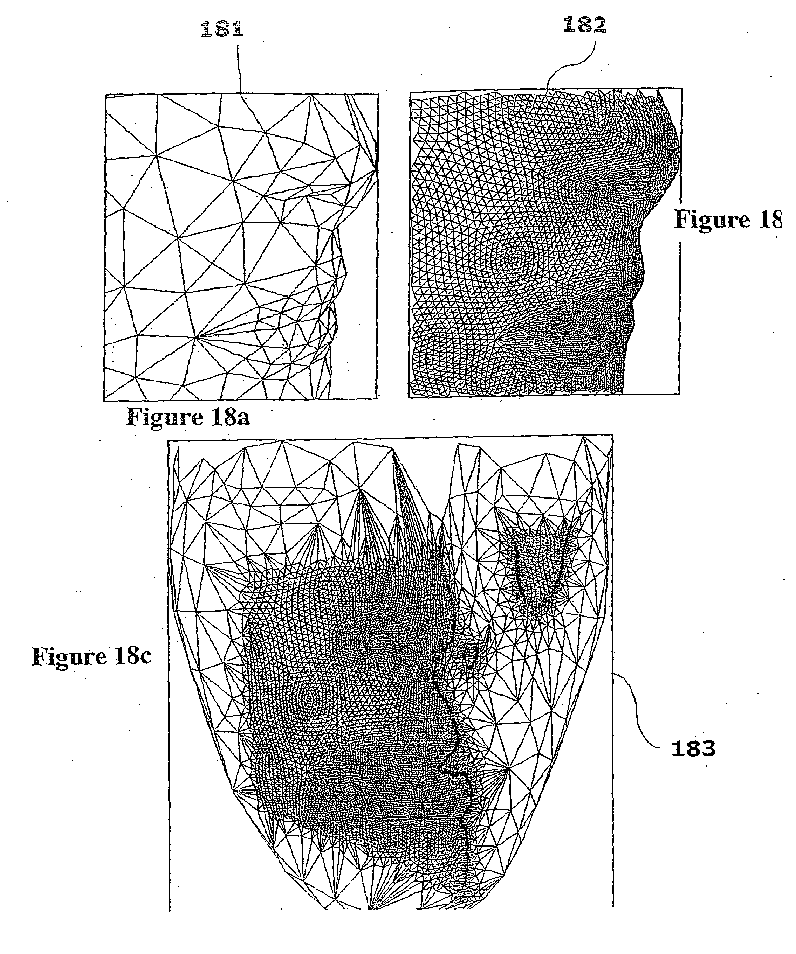

Les figures 18a à 18c présentent les résultats obtenus en mettant en oeuvre le procédé de raffinement selon l'invention sur un maillage type, représentatif d'un visage. On présente en figure 18a le maillage original 181, avant la mise en oeuvre du procédé selon l'invention. La figure 18b présente l'image 182 obtenue après quatre itérations du procédé de raffinement dans le champ de vision d'un observateur et huit itérations sur la silhouette du visage 181.

On remarque, en figure 18c, que l'aspect polygonal de la silhouette a été supprimé, et que la géométrie du maillage n'a été raffinée que sur les régions visuellement pertinentes de l'image 183.

On présente désormais, en relation avec les figures 19a à 19c, les résultats obtenus en mettant en oeuvre l'algorithme adaptatif selon l'invention sur un maillage 191 comportant des arêtes vives à subdiviser.

Le maillage 192 de la figure 19b correspond au maillage obtenue sans détection préalable à la mise en oeuvre du procédé de raffinement, des coins et des arêtes vives du maillage 191. On constate alors l'obtention d'une surface lissée.

En revanche, le maillage 193 de la figure 19c a été subdivisé de manière adaptative en préservant les coins et en interpolant les arêtes vives régulières. On constate la suppression de l'aspect polygonal des arêtes vives régulières sur le maillage original, ainsi qu'une interpolation de la surface originale.

## Revendications

1. Procédé de raffinement d'un maillage représentatif d'un objet en trois dimensions, ledit maillage étant constitué d'un arrangement de sommets et de faces, ledit procédé comprenant une étape de sélection d'au moins une région d'intérêt sur laquelle ledit raffinement du maillage est effectué localement,
**caractérisé en ce que** la ou lesdites régions d'intérêt appartiennent au groupe comprenant :
- au moins une silhouette dudit objet en trois dimensions ;
- des faces dudit maillage appartenant à une zone animée dudit objet.

2. Procédé de raffinement selon la revendication 1, **caractérisé en ce que** ledit maillage est un maillage triangulaire (120) constitué d'un arrangement de sommets (71 ; 111, 114 ; 131 ; S) et de faces triangulaires (F), définies chacune par trois références aux sommets qu'elle relie, et présentant trois arêtes (121) reliant chacune deux desdits sommets,
et **en ce que** ladite silhouette comprend des faces triangulaires (51) adjacentes à un ensemble d'arêtes (42) partageant chacune deux faces triangulaires, une première face étant orientée face à l'oeil d'un observateur (41) et une seconde face étant d'orientation opposée.

3. Procédé selon la revendication 2, **caractérisé en ce qu'**il comprend en outre une étape (13 ; 61) de subdivision hybride d'au moins certaines desdites faces triangulaires (63), mettant en oeuvre une opération de subdivision 1 vers 3 barycentrique, de manière à diviser chacune desdites faces en trois faces triangulaires (65, 66) par l'ajout d'un sommet (64).

4. Procédé selon la revendication 3, **caractérisé en ce qu'**il comprend en outre une étape (62) de permutation d'arêtes d'au moins certaines desdites faces triangulaires subdivisées, consistant à supprimer chaque arête de la face triangulaire avant subdivision et à la remplacer par une arête (67) reliant le sommet ajouté au sommet opposé à l'arête supprimée de la face triangulaire adjacente.

5. Procédé selon l'une quelconque des revendications 2 à 4, **caractérisé en ce que** ladite étape de sélection est mise en oeuvre par un opérateur et/ou selon un critère de détection prédéterminé.

6. Procédé selon la revendication 5, **caractérisé en ce que**, ladite étape de sélection étant mise en oeuvre selon un critère de détection prédéterminé, au moins une desdites régions d'intérêt appartient au groupe comprenant :
- des faces triangulaires (21) situées à l'intérieur d'une pyramide de vision (22) définie par l'oeil d'un observateur et une fenêtre de visualisation ;
- des faces triangulaires (32) orientées face à l'oeil d'un observateur. la ou lesdites régions d'intérêt (21) appartenant au groupe comprenant :
- des faces triangulaires (51) adjacentes à un ensemble d'arêtes (42) partageant chacune deux faces triangulaires, une première face étant orientée face à l'oeil d'un observateur (41) et une seconde face étant d'orientation opposée;
- des faces triangulaires appartenant à une zone animée dudit objet.

7. Procédé selon l'une quelconque des revendications 3 à 6, **caractérisé en ce qu'**il comprend en outre une étape de filtrage (14) de la position avant subdivision d'au moins certains desdits sommets du maillage.

8. Procédé selon la revendication 7, **caractérisé en ce que** ladite étape de filtrage de la position avant subdivision d'un sommet du maillage tient compte de la valence dudit sommet et de la valence de ses sommets voisins, la valence étant le nombre d'arêtes arrivant à un sommet.

9. Procédé selon la revendication 8, **caractérisé en ce que** ladite étape de filtrage met en oeuvre un calcul de coefficients de pondération pour chaque valence, obtenu par analyse du comportement asymptotique d'une matrice de subdivision globale stochastique.

10. Procédé selon l'une quelconque des revendications 3 à 9, **caractérisé en ce qu'**il met en oeuvre au moins une contrainte permettant d'interdire la mise en oeuvre de ladite étape de subdivision sur une face donnée et/ou de ladite étape de permutation sur une arête donnée et/ou de ladite étape de filtrage sur un sommet donné.

11. Procédé selon la revendication 10, **caractérisé en ce que** ladite au moins une contrainte permet d'interdire la mise en oeuvre d'une étape appartenant au groupe comprenant :
- une étape de permutation d'une arête vive ;
une étape de filtrage de la position d'un sommet formant un coin ;
- une étape de subdivision d'une face triangulaire située sur une région plane dudit objet.

12. Procédé selon l'une quelconque des revendications 2 à 11, **caractérise en ce qu'**il met en oeuvre une étape de lissage d'au moins une arête vive, consistant à entrelacer un processus d'approximation de courbe avec un processus d'approximation de surfaces, mettant en oeuvre une opération de subdivision de ladite arête vive et/ou une opération de filtrage.

13. Procédé selon l'une quelconque des revendications 3 à 12, **caractérisé en ce qu'**il comprend en outre une étape d'interpolation des normales et/ou des positions des sommets entre les positions initiale et finale desdits sommets ajoutés.

14. Application du procédé selon l'une quelconque des revendications 2 à 13, à l'une quelconque des opérations suivantes :
- transmission de données sur un réseau de type internet et/ou intranet ;
- visualisation d'images relatives à des applications culturelles ;
- visualisation d'images et/ou de séquences d'images relatives à un jeu collaboratif ;
- transmission et/ou visualisation de données relatives à un travail collaboratif ;
- télécommerce.

15. Système de transmission d'un maillage triangulaire représentatif d'un objet en trois dimensions (3D), entre, d'une part, au moins un codeur et/ou au moins un support de données, et, d'autre part, au moins un terminal de visualisation,
ledit maillage étant constitué d'un arrangement de sommets et de faces triangulaires, définies chacune par trois références aux sommets qu'elle relie, et présentant trois arêtes reliant chacune deux desdits sommets,
**ledit maillage étant raffiné** localement sur au moins une région d'intérêt sélectionnée,
**caractérisé en ce que** lesdits moyens de sélection de ladite au moins une région d'intérêt sont mis en oeuvre par au moins un desdits terminaux de visualisation,
et **en ce que** la ou lesdites régions d'intérêt (21) appartiennent au groupe comprenant :
- des faces triangulaires (51) adjacentes à un ensemble d'arêtes (42) partageant chacune deux faces triangulaires, une première face étant orientée face à l'oeil d'un observateur (41) et une seconde face étant d'orientation opposée ;
- des faces triangulaires appartenant à une zone animée dudit objet.

16. Dispositif de raffinement d'un maillage représentatif d'un objet en trois dimensions, ledit maillage étant constitué d'un arrangement de sommets et de faces, ledit dispositif comprenant des moyens de sélection d'au moins une région d'intérêt sur laquelle ledit raffinement du maillage est effectué localement,
**caractérisé en ce que** la ou lesdites régions d'intérêt appartiennent au groupe comprenant :
- au moins une silhouette dudit objet en trois dimensions:
- des faces dudit maillage appartenant à une zone animée dudit objet,

17. Terminal de visualisation d'une représentation d'un objet en trois dimensions (3D),
ladite représentation étant associée à un maillage constitué d'un arrangement de sommets et de faces,
ledit terminal mettant en oeuvre des moyens de raffinement localisé de ladite représentation, de façon à synthétiser et/ou visualiser au moins une région d'intérêt prédéterminée dudit objet de manière raffinée,
**caractérisé en ce que** la ou lesdites régions d'intérêt (21) appartiennent au groupe comprenant :
- des faces triangulaires (51) adjacentes à un ensemble d'arêtes (42) partageant chacune deux faces triangulaires, une première face étant orientée face à l'oeil d'un observateur (41) et une seconde face étant d'orientation opposée ;
- des faces triangulaires appartenant à une zone animée dudit objet.

## Patentansprüche

1. Verfahren zur Verfeinerung eines Mesh-Repräsentanten eines dreidimensionalen (3D) Objektes, wobei sich das Mesh aus einer Anordnung von Knotenpunkten und Flächen zusammensetzt, wobei das Verfahren einen Schritt zum Selektieren zumindest einer interessanten Region aufweist, auf der lokal die Verfeinerung des Meshs ausgeführt wird,
**dadurch gekennzeichnet, dass** die interessante(n) Region(en) (21) der Gruppe angehören mit:
zumindest einer Silhouette des dreidimensionalen Objektes;
einem animierten Bereich des Objektes angehörende Flächen des Objektes.

2. Verfahren zur Verfeinerung nach Anspruch 1,
**dadurch gekennzeichnet, dass** das Mesh ein Dreiecks-Mesh (120) ist, das sich aus einer Gruppe von Knotenpunkten (71; 111, 114; 131; S) und dreieckigen Flächen (F) zusammensetzt, jede definiert durch drei Referenzen zu den durch sie verbundenen Knotenpunkten und mit drei jeweils die zwei Knotenpunkte verbindenden Kanten (121), und dass die Silhouette dreieckige Flächen (51) aufweist angrenzend an eine Gruppe von Kanten (42), von denen jede zwei dreieckige Flächen teilt, eine erste Fläche, die zum Auge des Betrachters (41) hin orientiert ist, und eine zweite Fläche, welche in die entgegengesetzte Richtung orientiert ist

3. Verfahren nach Anspruch 2,
**dadurch gekennzeichnet, dass** es auch einen hybriden Unterteilungsschritt (13; 61) für zumindest einige der dreieckigen Flächen (63) aufweist, unter Verwendung einer 1-zu-3-Schwerpunkt-Unterteilungsoperation, um jede der Flächen durch Hinzufügen eines Knotenpunktes (64) in drei dreieckige Flächen (65, 66) zu unterteilen.

4. Verfahren nach Anspruch 3,
**dadurch gekennzeichnet, dass** es auch einen Schritt (62) zum Tauschen von Kanten von zumindest einigen der unterteilten dreieckigen Flächen aufweist, welcher aus einem Eliminieren jeder Kante der dreieckigen Fläche vor der Unterteilung und einem Ersetzen dieser durch eine den hinzugefügten Knotenpunkt mit dem zu der gelöschten Kante in der angrenzenden dreieckigen Fläche gegenüberliegenden Knotenpunkt verbindende Kante (67) besteht.

5. Verfahren nach einem der Ansprüche 2 bis 4,
**dadurch gekennzeichnet, dass** der Selektierungsschritt von einer Bedienperson und/oder gemäß einem vorbestimmten Auswahlkriterium verwendet wird.

6. Verfahren nach Anspruch 5,
**dadurch gekennzeichnet, dass** der Selektierungsschritt gemäß einem vorbestimmten Erfassungskriterium angewendet wird, wobei zumindest eine der interessanten Regionen der Gruppe angehört mit:
dreieckigen Flächen (21), die sich innerhalb einer durch das Auge des Betrachters und ein Anzeigefenster definierten Betrachtungspyramide (22) befinden;
dreieckigen Flächen (32), die zum Auge des Betrachters hin orientiert sind,
wobei die interessante(n) Region(en) (21) der Gruppe angehören mit:
dreieckigen Flächen (51) angrenzend an eine Gruppe von Kanten (42), von denen jede zwei dreieckige Flächen teilt, eine erste Fläche, die zum Auge des Betrachters (41) hin orientiert ist, und eine zweite Fläche, welche in die entgegengesetzte Richtung gerichtet ist;
dreieckigen Flächen, die einem animierten Bereich des Objektes angehören.

7. Verfahren nach einem der Ansprüche 3 bis 6,
**dadurch gekennzeichnet, dass** es auch einen Positionsfilterungsschritt (14) vor der Unterteilung zumindest einiger der Knotenpunkte aus dem Mesh aufweist.

8. Verfahren nach Anspruch 7,
**dadurch gekennzeichnet, dass** der Positionsfilterungsschritt vor der Unterteilung eines Knotenpunktes aus dem Mesh die Wertigkeit des Knotenpunktes und die Wertigkeit seiner benachbarten Knotenpunkte berücksichtigt, wobei die Wertigkeit die Anzahl der an einem Knotenpunkt ankommenden Kanten ist.

9. Verfahren nach Anspruch 8,
**dadurch gekennzeichnet, dass** der Filterungsschritt eine Berechnung von Gewichtungskoeffizienten für jede durch Analyse des asymptotischen Verhaltens einer stochastischen globalen Unterteilungsmatrix erhaltene Wertigkeit implementiert.

10. Verfahren nach einem der Ansprüche 3 bis 9,
**dadurch gekennzeichnet, dass** es zumindest eine Bedingung anwendet, um Implementierung des Unterteilungsschrittes für eine gegebene Fläche und/oder des Tauschschrittes für eine gegebene Kante, und/oder des Filterungsschrittes für einen gegebenen Knotenpunkt zu vermeiden.

11. Verfahren nach Anspruch 10,
**dadurch gekennzeichnet, dass** die zumindest eine Bedingung die Implementierung eines Schrittes vermeidet, der zu der Gruppe gehört mit:
einem Schritt zum Tauschen einer scharfen Kante,
einem Schritt zum Filtern der Position eines eine Ecke bildenden Knotenpunktes;
einem Schritt zum Unterteilen einer dreieckigen, sich auf einer flachen Region des Objektes befindlichen Fläche.

12. Verfahren nach einem der Ansprüche 2 bis 11,
**dadurch gekennzeichnet, dass** es einen Glättungsschritt für zumindest eine scharfe Kante anwendet, bestehend aus Verflechtung eines Kurvenapproximationsverfahrens mit einem Oberflächenapproximationsverfahren, dabei implementierend eine Unterteilungsoperation auf der scharfen Kante und/oder eine Filteroperation.

13. Verfahren nach einem der Ansprüche 3 bis 12,
**dadurch gekennzeichnet, dass** es auch einen Schritt zum Interpolieren von Normalen und/oder den Positionen von Knotenpunkten zwischen den Anfangs- und Endpositionen der hinzugefügten Knotenpunkte aufweist.

14. Anwendung des Verfahrens nach einem der Ansprüche 2 bis 13 auf eine der folgenden Operationen:
Datenübertragung in einem Internet- und/oder intranetartigen Netz;
Anzeige von auf kulturelle Anwendungen bezogenen Bildern;
Anzeige von auf kooperative Spiele bezogenen Bildern und/oder Bildsequenzen;
Übertragung und/oder Anzeige von auf kooperative Arbeit bezogenen Daten Ferneinkaufen (remote shopping)

15. System zur Übertragung eines ein dreidimensionales Objekt repräsentierenden Dreiecks-Meshs zwischen erstens einem Codierer und/oder einer Datenunterstützung (data support) und zweitens mindestens einer Anzeigestation,
wobei sich das Mesh aus einer Anordnung von Knotenpunkten und dreieckigen Flächen zusammensetzt, jede definiert durch drei Referenzen zu den sie verbindenden Knotenpunkten und die drei jeweils zwei Knotenpunkte verbindenden Kanten,
wobei die Verfeinerung des Meshs lokal auf der zumindest einen interessanten Region ausgeführt wird,
**dadurch gekennzeichnet, dass** die Mittel zum Selektieren der zumindest einen interessanten Region durch zumindest eine der Anzeigestationen gesteuert werden,
und dass die interessante(n) Region(en) (21) der Gruppe angehört (angehören) mit:
dreieckigen Flächen (51), angrenzend an eine Gruppe von Kanten (42), von denen jede zwei dreieckige Flächen teilt, eine erste Fläche, die zum Auge des Betrachters (41) hin orientiert ist, und eine zweite Fläche, welche in die entgegengesetzte Richtung gerichtet ist;
dreieckigen Flächen, die einem animierten Bereich des Objektes angehören,

16. Decodierungsvorrichtung für einen Dreiecks-Mesh-Vertreter eines dreidimensionalen (3D) Objektes,
wobei das Dreiecks-Mesh sich aus einer Gruppe von Knotenpunkten und dreieckigen Flächen zusammensetzt, jede definiert durch drei Referenzen zu den sie verbindenden Knotenpunkten und drei jeweils die zwei Knotenpunkte verbindenden Kanten,
wobei die Vorrichtung Mittel zum Selektieren zumindest einer interessanten Region des Objektes verwendet, auf welcher das Mesh lokal in verfeinender Weise decodiert wird,
**dadurch gekennzeichnet, dass** die interessante(n) Region(en) (21) der Gruppe angehören mit:
dreieckigen Flächen (51), angrenzend an eine Gruppe von Kanten (42), von denen jede zwei dreieckige Flächen teilt, eine erste Fläche, die zum Auge des Betrachters (41) hin orientiert ist, und eine zweite Fläche, welche in die entgegengesetzte Richtung gerichtet ist;
dreieckigen Flächen, die einem animierten Bereich des Objektes angehören.

17. Anzeigestation zur Darstellung eines dreidimensionalen (3D) Objektes, wobei die Darstellung mit einem aus einer Gruppe von Knotenpunkten und dreieckigen Flächen zusammengesetzten Mesh verbunden ist,
wobei die Station Mittel zur lokalen Verfeinerung der Anzeige verwendet, um zumindest eine vorbestimmte interessante Region auf dem Objekt in geglätteter Weise aufzubauen und/oder anzuzeigen.
**dadurch gekennzeichnet, dass** die interessante(n) Region(en) (21) der Gruppe angehören mit:
dreieckigen Flächen (51), angrenzend an eine Gruppe von Kanten (42), von denen jede zwei dreieckige Flächen teilt, eine erste Fläche, die zum Auge des Betrachters (41) hin orientiert ist, und eine zweite Fläche, welche in die entgegengesetzte Richtung gerichtet ist;
dreieckigen Flächen, die einem animierten Bereich des Objektes angehören.

## Claims

1. Process for refinement of a mesh representing an object in three dimensions, said mesh being composed of an arrangement of vertices and faces, said process comprising a stage of selecting at least one region of interest on which said refinement of mesh is performed locally, **characterised in that** said regions of interest belong to the group comprising:
- at least one silhouette of said object in three dimensions;
- faces of said mesh belonging to an animated zone of said object.

2. Refinement process according to claim 1 **characterised in that** said mesh is a triangular mesh (120) composed of an arrangement of vertices (71; 111, 114; 131; s) and triangular faces (F) each defined by three references to the vertices that it connects, and having three edges (121) each linking two of said vertices, and **in that** said silhouette comprises triangular faces (51) adjacent to a set of edges (42) each sharing two triangular faces, a first face being oriented facing the eye of an observer (41) and a second face being of opposite orientation.

3. Process according to claim 2, **characterised in that** it also comprises a stage (13; 61) of hybrid sub-division of at least certain of said triangular faces (63) using a 1-to-3 centre of gravity sub-division operation so as to divide each of said faces into three triangular faces (65, 66) by adding a vertex (64).

4. Process according to claim 3, **characterised in that** it also comprises a step (62) of permutation of edges of at least some of said sub-divided triangular faces, comprising eliminating each edge of the triangular face before sub-division and replacing it with an edge (67) connecting the added vertex to the vertex opposite the deleted edge of the adjacent triangular face.

5. Process according to any of one of claims 2 to 4, **characterised in that** said selection step is performed by an operator and/or according to a predetermined selection criterion.

6. Process according to claim 5, **characterised in that**, said selection step being applied according to a predetermined detection criterion, at least one of the said regions of interest belongs to the group comprising:
- triangular faces (21) located within a pyramid of vision (22) defined by the eye of an observer and a display window;
- triangular faces (32) oriented facing the eye of an observer,
said region(s) of interest (21) belonging to the group comprising:
- triangular faces (51) adjacent to a set of edges (42) each sharing two triangular faces, a first face being oriented facing the eye of an observer (41) and a second face being of opposite orientation;
- triangular faces belonging to an animated zone of said object.

7. Process according to any of claims 3 to 6, **characterised in that** it also comprises a position filtering step (14) before subdivision of at least some of said mesh vertices.

8. Process according to claim 7, **characterised in that** said position filtering step before subdivision of a vertex of the mesh takes account of the valence of the said vertex and the valence of its adjacent vertices, the valence being the number of edges arriving at a vertex.

9. Process according to claim 8, **characterised in that** said filtering step implements a weighting coefficient calculation for each valence, obtained by analysing the asymptotic behaviour of a stochastic global subdivision matrix.

10. Process according to any of claims 3 to 9, **characterised in that** it implements at least one constraint allowing prevention of implementation of said subdivision step on a given face and/or said permutation step on a given edge and/or said filtering step on a given vertex.

11. Process according to claim 10, **characterised in that** said at least one constraint allows prevention of implementation of a step belonging to the group comprising:
- a permutation step of a sharp edge,
- a position filtering step of a vertex forming a corner;
- a subdivision step of a triangular face located on a flat region of said object.

12. Process according to any one of claims 2 to 11, **characterised in that** it implements a step of smoothing at least one sharp edge, comprising interlacing a curve approximation process with a surface approximation process, implementing a subdivision operation on said sharp edge and/or a filtering operation.

13. Process according to any one of claims 3 to 12, **characterised in that** it also comprises a step of interpolating normals and/or positions of vertices between the initial and final positions of the said added vertices.

14. Application of the process according to any one of claims 2 to 13, to any of the following operations:
- data transmission on an internet and/or intranet type network;
- display of images relating to cultural applications;
- display of images and/or image sequences relating to a collaborative game;
- transmission and/or display of data relative to collaborative work;
- tele-commerce.

15. System for transmission of a triangular mesh representing an object in three dimensions (3D) between firstly at least one encoder and/or at least one data support and secondly at least one display terminal, said mesh being composed of an arrangement of vertices and triangular faces each defined by three references to the vertices that it connects, and having three edges each linking two of the said vertices, said mesh being refined locally on at least one selected region of interest, **characterised in that** said means of selection of said at least one region of interest are implemented by at least one of said display terminals, and **in that** said region or regions of interest (21) belong to the group comprising:
- triangular faces (51) adjacent to a set of edges (42) each sharing two triangular faces, a first face being oriented facing the eye of the observer (41) and the second face being of opposite orientation,
- triangular faces belonging to an animated zone of said object.

16. Device for refinement of a mesh representing an object in three dimensions, said mesh being composed of an arrangement of vertices and faces, said device comprising means of selection of at least one region of interest on which said refinement of mesh is performed locally, **characterised in that** said region or regions of interest belong to the group comprising:
- at least one silhouette of said object in three dimensions;
- faces of said mesh belonging to an animated zone of said object.

17. Terminal for displaying a representation of an object in three dimensions (3D), said representation being associated with a mesh composed of an arrangement of vertices and faces, said terminal implementing means of localised refinement of said representation so as to synthesise and/or display at least one predetermined region of interest of said object in a refined manner, **characterised in that** said region or regions of interest (21) belong to the group comprising:
- triangular faces (51) adjacent to a set of edges (42) each sharing two triangular faces, a first face being oriented facing the eye of the observer (41) and a second face being of opposite orientation,
- triangular faces belonging to an animated zone of said object.
